# EUROPEAN PATENT APPLICATION

(11) **EP 2 044 870 A1**
(43) Date of publication of application: **08.04.2009**
(21) Application number: 07117912.1
(22) Date of filing: 04.10.2007
(51) Int. Cl.: A47J 37/06

(54) **Electrical grilling apparatus**

(71) Applicant: Eksen Makine Sanayi ve Ticaret A.S., 41480 Kocaeli (TR)
(72) Inventor: Tahincioglu, Besim EKSEN Makine Sanayi ve Ticaret A.S., 41480, Kocaeli (TR)
(74) Representative: Sevinç, Erkan

(57) **Abstract**

The present invention proposes a domestic appliance and specifically an electrical grilling apparatus (11) having a stationary lower grilling body standing on a base (12) and an upper body (17) hinged thereto in an openable manner to form a semi-closed grilling chamber confined by collapsible sidewalls. Said grilling chamber is in air communication with a fan (18) integral to said upper body (17) in the manner to draw air from the grilling chamber. Said fan (18) outlet is associated with an upper region of said lower grilling body in the manner to recirculate hot air comprised of smoke and cooking vapors back to the grilling surface (13). Prior to recirculation however, smoke and cooking vapors are filtered through a series of filters. The appliance further features a grill structure in a pyramid form easing draining of drippings into fat collecting vessels.

## Description

### Technical Field of the Invention

The present invention relates to an electrical grilling apparatus having improved means allowing indoor grilling.

### Background of the Invention

Portable electrical appliances allowing indoor grilling are presently of greater preference as they incorporate means for removing smoke and cooking vapors. Therefore such an appliance may conveniently be utilized in closed areas without polluting ambient air where cooking is done. A solution to draw smoke from across grilling area is to arrange a fan integral to the grilling apparatus. US patent 4,034,663 discloses such an apparatus intended to be used on a kitchen worktop with a flexible tube attached to the fan outlet and allowing discharge through a window vent. The apparatus therein, although allowing indoor use, is not portable in literal essence as the discharge tube should always be attached to a vent fitting to ensure a smoke-free operation.

The present invention proposes a portable electrical smoke-free grilling apparatus allowing indoor use irrespective of presence of a discharge vent connection. To this end, the grilling apparatus according to the present invention comprises a power driven fan communicating air, smoke and cooking vapors from the outlet back to the grilling surface. This arrangement of the fan discharge tube being independent of a fixed vent connection also provides transfer of heat energy contained in the circulating air to the grilling surface, therefore saving power supplied to heat sources. An equally important result of the arrangement also lies in that it substantially eliminates transfer of both heat energy and smoke into ambient air, bearing in mind that an indoor grill apparatus may well become an efficient heat source dissipating heat to surrounding environment.

The grilling apparatus further having a foldable structure is advantageous for storing purposes when not in use. The present invention therefore proposes an improved indoor grilling apparatus which can conveniently be used anywhere with a mains supply with considerably decreased pollution and/or heat emission to ambient air and also providing power saving.

### Objects of the Invention

Primary object of the present invention is to provide a portable electrical grilling apparatus allowing indoor use irrespective of presence of a discharge vent connection.

Another object of the present invention is to provide a portable electrical grilling apparatus saving power supplied to heat sources.

Another object of the present invention is to provide a portable electrical grilling apparatus eliminating transfer of both heat energy and smoke into ambient air

### Summary of the Invention

The present invention proposes a domestic appliance and specifically an electrical grilling apparatus having a stationary lower grilling body standing on a base and an upper body hinged thereto in an openable manner to form a semi-closed grilling chamber confined by collapsible sidewalls. Said grilling chamber is in air communication with a fan integral to said upper body in the manner to draw air from the grilling chamber. Said fan outlet is associated with an upper region of said lower grilling body in the manner to recirculate hot air comprised of smoke and cooking vapors back to the grilling surface. Prior to recirculation however, smoke and cooking vapors are filtered through a series of filters. The appliance further features a grill structure in a pyramid form easing draining of drippings into fat collecting vessels.

### Brief Description of the Figures

Accompanying drawings are given solely for the purpose of exemplifying an electrical grilling apparatus, whose advantages over prior art were outlined above and will be explained in detail hereinafter:

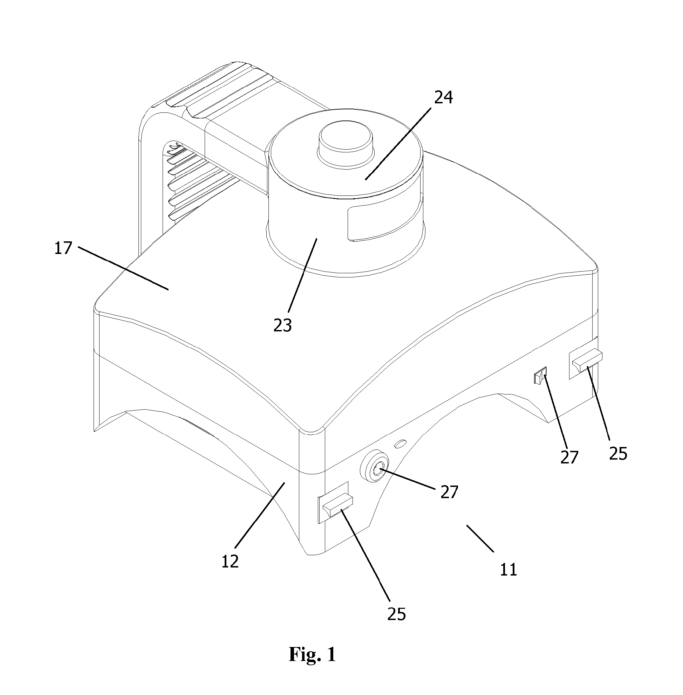

Fig. 1 demonstrates a perspective view of the electrical grilling apparatus according to the present invention in closed configuration.

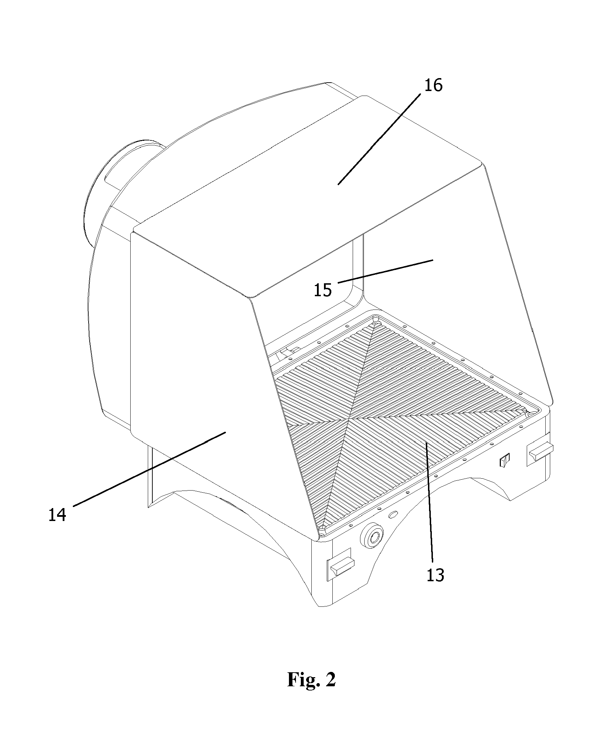

Fig. 2 demonstrates a perspective view of the electrical grilling apparatus according to the present invention in opened configuration.

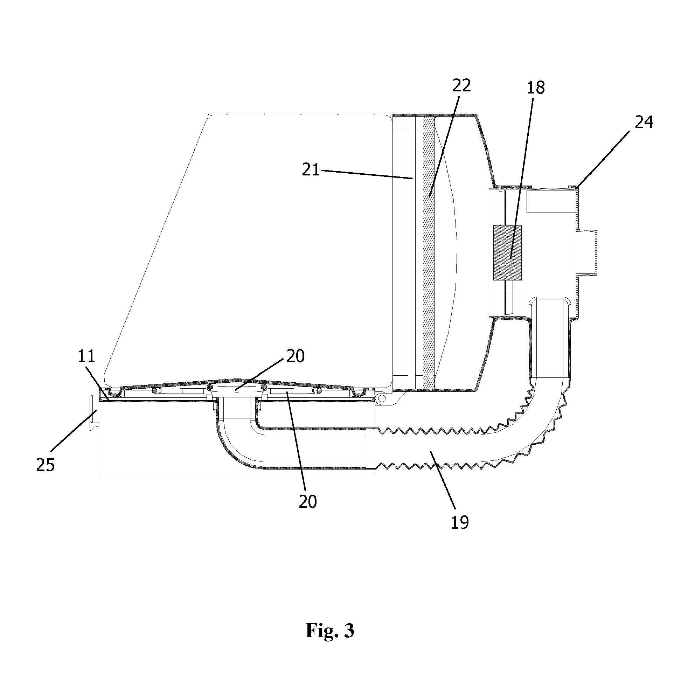

Fig. 3 demonstrates a lateral cross-section view of the electrical grilling apparatus according to the present invention along the middle vertical plane.

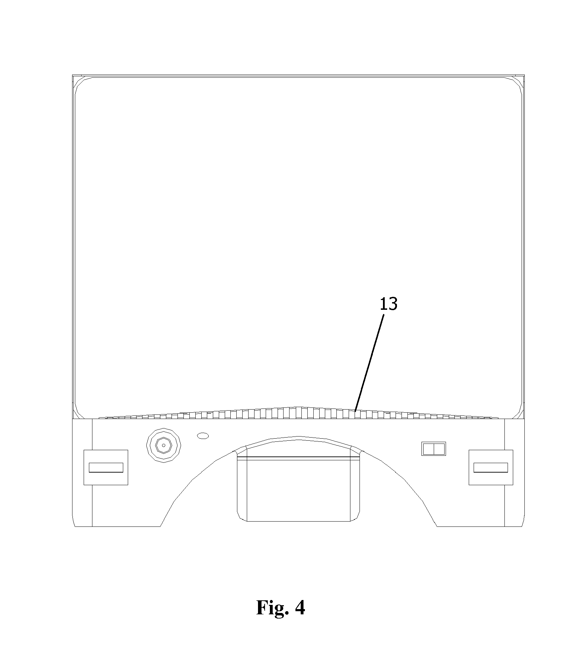

Fig. 4 demonstrates a front view of the electrical grilling apparatus according to the present invention.

### Detailed Description of the Invention

Referring now to the figures outlined above, the present invention proposes an electrical household appliance and namely an electrical grilling apparatus (11) having a base part (12) suitable for resting on a horizontal surface. Said base part (12) is delimited from above by a grilling grid (13) in the form of a pyramid sloping down toward the edges. An upper body (17) is hinged to a lower grilling body, the latter being formed by said base part (12) together with said grilling grid (13).

In opened configuration, the space above said grilling grid (13) is structured in the form of a semi-closed grilling chamber the air of which is allowed to communicate with ambient air only through the front side; that is said grilling chamber is delimited on all sides except the front side. Said grilling chamber is defined by lateral walls (14, 15), an upper wall (16) and said upper body (17). Said lateral walls (14, 15) are suitably hinged to said base part (12) supporting said grilling grid (13) to successively close upon the same in closed configuration. After use the grill may be rolled up by closing said upper wall (16) upon said upper body (17) and the latter two upon said lower grilling body. Said upper body (17), said lateral walls (14, 15) and said upper wall (16) can be suitably fixed with respect to each other in opened configuration to provide a stationary structure when in operation. Although not shown in accompanying drawings, basic mechanical fastening elements may be provided in order to releasably fasten separate walls to each other in opened position.

Said upper body (17) according to the present invention is equipped with a power driven fan (18) circulating air, through a flexible tube (19), from above the grilling grid (13) surface into a base part (12) upper region accommodating heat sources in the form of electrical resistances (20). Grilling chamber air containing smoke from molten fats of meat-like food is first filtered through a conventional metal filter (21) serving as a dust and oil filter. Fan (18) intake air is then filtered by a conventional carbon filter (22). Said filters (21, 22) can easily be removed for cleaning and have good stability for a prolonged period of time. As filters of the present type are not within the scope of the core approach underlying the present invention, and are widely practiced in the art to the extent to be easily appreciated by the person skilled in the art, needs not be further mentioned herein.

Hot air drawn from across said grilling chamber being circulating back to the grilling grid (13) has direct effects on the quality of grilling. First of all, substantial part of polluted air is not allowed into ambient air. Therefore heat transfer to the room air is also substantially prevented due to recirculation. Filtered hot air forced back onto the resistive loads (20) provides power saving as part of heat released by said resistive loads (20) is transferred back to the grilling environment by convection. Power transferred to heat sources (20) may therefore be manually reduced by a user after a certain period of operation time.

Further, the apparatus according to the present invention features an airflow control cover (24) provided on the rearmost part of a fan housing (23). Said cover (24) constitutes a simple mechanical arrangement designed to be rotated for manually adjusting full or partial covering of a plurality of openings (not shown) in order for adjusting proportion of air to be circulated back to the grilling grid (13) and to be allowed into ambient air. Position of said cover (24) in the manner to block air passage in all of the openings on said rearmost part will lead to circulation of the whole amount of drawn air back to the grilling grid (13). Contrarily, if said openings are left fully open, grilling chamber air will only partially be circulated back. Drawn air allowed into ambient air through said openings being already filtered, will not pollute the air inside a room. Said airflow control cover (24) may especially be useful if a user prefers to reduce amount of air forced onto the food article being grilled.

Said portable electrical appliance further comprises a pair of removable fat collection vessels (25) extending longitudinally at both sides. The fat collection vessels (25) are preferably filled with tap water by the user in order to prevent smoke formation during flow of molten fat. Said pyramid form grilling grid (13) having a circumferential fat channel with four drain openings at the corners let fat drip into said fat collection vessels (25).

Said appliance also comprises a conventional reflector (26) in order to increase heat flux received by the food article being grilled and minimize thermal heat losses. Said reflector (26) is located immediately below said electric resistances (20) to cover the whole horizontal plane except for a small surface portion said flexible tube (19) is associated with said base part (12) upper region accommodating heat sources.

A conventional user control panel (27) may be provided to let a user perform different functions such as powering and thermostatic control.

## Claims

1. An electrical household appliance and specifically an electrical grilling apparatus (11) comprising a lower grilling body being hinged to an upper body (17) with a base part (12) suitable for resting on a horizontal surface, said lower grilling body comprising a grilling grid (13) and electrical resistances (20) for radiating heat to said grilling grid (13) surface, said upper body (17) being equipped with a power driven fan (18) drawing air from above said grilling grid (13) surface wherein said fan (18) outlet is associated with said lower grilling body in the manner to recirculate air from above said grilling grid (13) surface back to the grilling grid (13) surface through a flexible tube (19).

2. An electrical household appliance as in Claim 1 wherein space portion vertically above said grilling grid (13) is structured in the form of a semi-closed grilling chamber in operation configuration whereby the air of said grilling chamber is allowed to communicate with ambient air through the front side.

3. An electrical household appliance as in Claim 2 wherein said grilling chamber is delimited on both sides by lateral walls (14, 15), from above by an upper wall (16), at the back by said upper body (17) and from below by said lower grilling body.

4. An electrical household appliance as in Claim 3 wherein said lateral walls (14, 15) are hinged to said base part (12) in the manner to be suitable for successively closing upon the same in closed configuration.

5. An electrical household appliance as in Claim 3 or 4 wherein said upper wall (16) is hinged to said upper body (17) in the manner to be suitable for closing upon the same in closed configuration.

6. An electrical household appliance as in Claim 1 and 5 wherein said upper body (17) is removably provided with a metal filter (21) between said grilling chamber and said fan (18).

7. An electrical household appliance as in Claim 1 wherein said upper body (17) is removably provided with a carbon filter (21) between said metal filter (21) and said fan (18).

8. An electrical household appliance as in any preceding claim wherein said upper body (17) is provided with an airflow control cover (24) on the rearmost part of a fan housing (23) enclosing said fan (18) and manually rotatable in the manner to provide full or partial covering of a plurality of openings on said rearmost part whereby proportion of air to be circulated back to the grilling grid (13) and to be allowed into ambient air is adjustable.

9. An electrical household appliance as in any preceding claim wherein said lower grilling body is equipped with a pair of removable fat collection vessels (25) extending longitudinally at both sides.

10. An electrical household appliance as in any preceding claim wherein said grilling grid (13) is designed in the form of a pyramid sloping down toward the edges and having a circumferential fat channel with four drain openings at the corners.

11. An electrical household appliance as in any preceding claim wherein said lower grilling body is equipped with a reflector (26) below said electric resistances (20).
